# FASCICULE DE BREVET EUROPEEN

(11) **EP 0 681 110 B1**
(45) Date de publication et mention de la délivrance du brevet: **08.07.1998**
(21) Numéro de dépôt: 95400653.2
(22) Date de dépôt: 23.03.1995
(51) Int. Cl.: F16B 37/04

(54) **Ecrou encagé perfectionné**
Verbesserte Käfigmutter
Improved nut cage

(30) Priorité: 05.05.1994 FR 9405544
(43) Date de publication de la demande: 08.11.1995
(73) Titulaire: RAPID S.A., F-75017 Paris (FR)
(72) Inventeur: Leon, Jean-Pierre, F-78800 Houilles (FR)
(74) Mandataire: Durand, Yves Armand Louis

(56) Documents cités:
- FR-A- 2 596 473
- FR-A- 2 613 439

## Description

La présente invention a essentiellement pour objet un écrou encagé perfectionné.

On a déjà proposé des écrous encagés se composant essentiellement d'un écrou à oreilles monté prisonnier dans une cage comportant des rampes définissant deux ouvertures opposées en forme de portion d'hélice et aptes à recevoir chacune une oreille de l'écrou. (voir par exemple FR-A- 2.613.439.

Ainsi, sous l'effet d'une action de vissage, l'écrou à oreilles pourra se déplacer par translation-rotation dans la cage, afin de permettre par exemple l'assemblage de plusieurs panneaux.

En d'autres termes, l'assemblage résultera d'une action de verrouillage quart de tour effectuée par l'écrou à oreilles.

Toutefois, ces écrous encagés connus n'étaient pas sans inconvénients. La structure de la cage était relativement complexe et il y avait également des difficultés pour effectuer le pré-montage de l'écrou dans sa cage.

Aussi, l'invention a pour but de remédier notamment à ces inconvénients en proposant un écrou encagé dont la structure est particulièrement simple et peu coûteuse et permettant un pré-montage de l'écrou dans sa cage d'une manière rapide et sans aucune difficulté spéciale.

A cet effet, l'invention a pour objet un écrou encagé perfectionné du type comprenant un écrou à oreilles monté prisonnier dans une cage comportant des rampes définissant deux ouvertures opposées en forme de portion d'hélice et aptes à recevoir chacune une oreille de l'écrou qui peut ainsi, sous l'effet d'une action de vissage, se déplacer par translation-rotation dans la cage qui comporte à sa partie supérieure, opposée à son fond, une platine d'appui munie d'un orifice, caractérisé en ce que ledit orifice présente une forme allongée correspondant sensiblement à la forme de l'écrou à oreilles pour permettre l'introduction et le pré-montage de l'écrou dans la cage au travers de ladite platine.

Suivant une autre caractéristique de cet écrou encagé, l'orifice allongé dans la platine précitée s'étend suivant une direction orthogonale au logement formé en fond de cage entre les deux rampes pour recevoir et retenir l'écrou à oreilles venant en butée sur ledit fond.

On précisera encore ici que le logement précité défini par la combinaison du fond de la cage avec les deux bras formant rampes est d'une forme telle qu'il constitue un moyen de clippage de l'écrou à oreilles dans ledit fond.

Suivant encore une autre caractéristique de cet écrou encagé, l'orifice allongé dans la platine possède une forme et/ou des dimensions telles que l'écrou à oreilles doit y être introduit à force et ne peut pas ressortir de la cage.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en perspective d'un écrou encagé selon cette invention.

La figure 2 est une vue en plan et de dessus de cet écrou encagé, suivant la flèche II de la figure 1.

Les figures 3, 4, 5 et 6 sont des vues en élévation et de côté illustrant successivement les différentes étapes conduisant à l'assemblage d'une pièce quelconque et d'une autre pièce à l'aide de l'écrou encagé conforme à la présente invention.

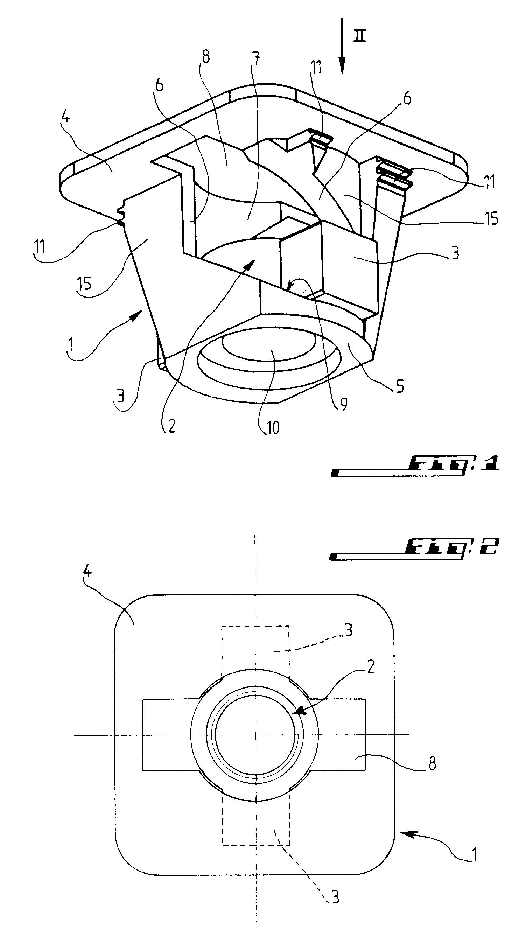

En se reportant plus particulièrement à la figure 1, on voit qu'un écrou encagé selon cette invention comprend essentiellement une cage 1 en une matière synthétique ou en acier à ressort, dans laquelle est monté prisonnier un écrou 2 comportant deux oreilles opposées 3.

La cage 1 comprend essentiellement un fût muni en partie supérieure d'une platine d'appui 4 et en partie inférieure d'un fond 5.

Le fût de la cage 1 est essentiellement formé de deux bras 15 en forme de rampes repérées en 6 sur les figures et définissant deux ouvertures opposées 7 présentant la forme d'une portion d'hélice. Les deux ouvertures opposées 7 reçoivent chacune une oreille 3 de l'écrou 2 qui, sous l'effet d'une action de vissage à l'aide d'une vis V, pourra se déplacer par translation-rotation dans la cage 1, comme on l'expliquera en détail plus loin.

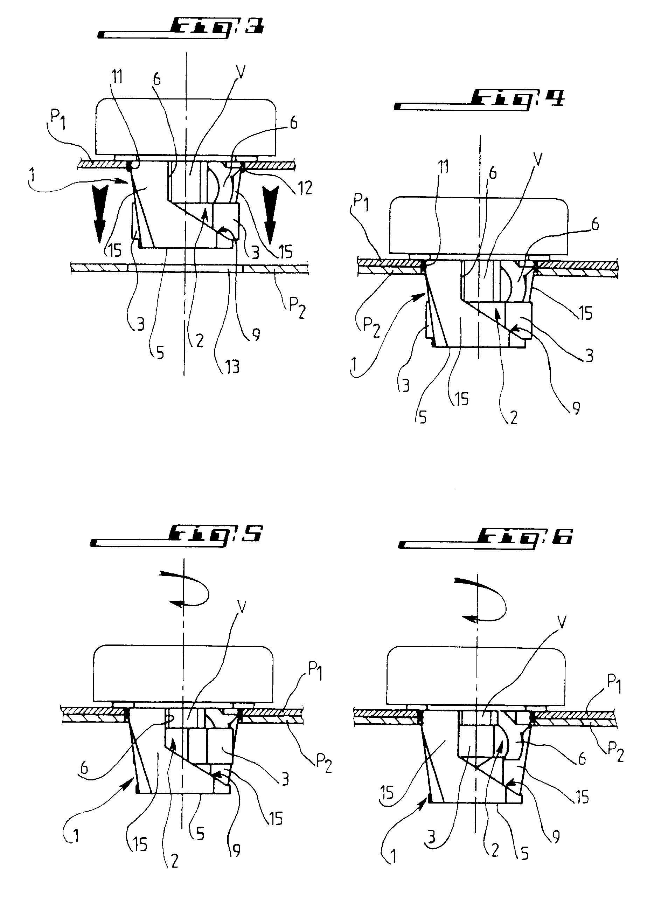

La platine d'appui 4 de la cage 1 est, conformément à l'invention, munie d'un orifice allongé 8, bien visible sur les figures 1 et 2 et présentant une forme qui correspond sensiblement à la forme de l'écrou 2 à oreilles 3 de façon à permettre l'introduction et le pré-montage de l'écrou 2 dans la cage 1 au travers de la platine 4 sans aucune difficulté particulière.

Il est important de noter ici que, suivant un mode de réalisation préféré, l'orifice allongé 8 dans la platine 4 possédera une forme et/ou des dimensions très légèrement différentes et/ou plus petites que celles de l'écrou 2 à oreilles 3. Ainsi, l'écrou à oreilles devra être introduit légèrement à force dans l'orifice 8 au travers de la platine 4, mais cela sans présenter de difficultés particulières, et l'écrou à oreilles, une fois franchie la platine 4, ne pourra plus ressortir intempestivement de la cage 1.

On observera encore que l'orifice allongé 8 dans la platine 4 s'étend suivant une direction qui est sensiblement orthogonale à celle du logement 9 formé en fond de cage entre les deux bras 15 formant rampes 6. Le logement 9 est apte à recevoir et retenir l'écrou 2 à oreilles 3 venant en butée sur le fond 5 de la cage 1.

Ce logement résultant de la combinaison du fond 5 avec les bras 15 formant rampes 6 est d'une forme telle qu'il constitue avantageusement un moyen de clippage de l'écrou 2 à oreilles 3 dans le fond de la cage 1.

Le fond 5 de la cage 1 comporte une ouverture 10 permettant le passage de la vis V.

On a montré en 11 des petites pattes appartenant aux bras 15 formant rampes 6, et permettant la retenue de la cage 1 dans l'orifice d'une pièce quelconque.

Mais, pour une meilleure compréhension de l'invention, on expliquera comment s'effectue l'assemblage de deux pièces à l'aide de l'écrou encagé qui vient d'être décrit, en se reportant plus particulièrement aux figures 3 à 6.

Initialement, l'écrou encagé se présente comme illustré par la figure 1, c'est-à-dire que l'écrou 2 à oreilles 3 a été introduit, comme expliqué précédemment, par l'orifice 8 dans la platine 4, et se trouve clippé en fond de cage.

Comme montré sur la figure 3, on engage l'écrou encagé dans l'orifice 12 d'une première pièce P₁, sur laquelle il est retenu grâce aux pattes d'accrochage 11.

La vis V est alors engagée dans le filetage de l'écrou 2, ou bien elle peut être pré-montée sur l'écrou encagé avant son introduction dans l'orifice ou poinçonnage 12 de la pièce P₁.

Il est important de noter ici que l'écrou encagé peut être pré-monté sur la pièce ou l'accessoire P₁ à fixer, avant fourniture ou livraison de cette pièce.

Ensuite, comme on le voit sur la figure 4, l'ensemble représenté sur la figure 3 est introduit par la cage 1 dans le poinçonnage 13 d'une deuxième pièce P₂ à assembler, qui peut être par exemple un panneau.

Une rotation est alors imprimée à la vis V, et, comme on le voit sur la figure 5, l'écrou 2 à oreilles 3 va se déplacer en translation entre les bras 15 formant rampes 6 de la cage 1, et cela tout en effectuant une rotation d'un quart de tour.

En fin de rotation, comme on le voit sur la figure 6, c'est-à-dire en fin de vissage, les oreilles 3 prendront appui sur la pièce P₂, qui sera ainsi fixée sur la pièce P₁.

On a donc réalisé suivant l'invention un écrou encagé de structure particulièrement simple et dans lequel le pré-montage de l'écrou à oreilles dans la cage s'effectue commodément et rapidement, ledit écrou ne risquant, en aucun cas, de sortir intempestivement de la cage.

Bien entendu, l'invention n'est nullement limitée au mode de réalisation décrit et illustré qui n'a été donné qu'à titre d'exemple.

## Revendications

1. Ecrou encagé du type comprenant un écrou (2) à oreilles (3) monté prisonnier dans une cage (1) comportant des rampes (6) définissant deux ouvertures opposées (7) en forme de portion d'hélice et aptes à recevoir chacune une oreille (3) de l'écrou (2) qui peut ainsi, sous l'effet d'une action de vissage, se déplacer par translation-rotation dans la cage (1) qui comporte à sa partie supérieure, opposée à son fond (5), une platine d'appui (4) munie d'un orifice, caractérisé en ce que ledit orifice (8) présente une forme allongée correspondant sensiblement à la forme de l'écrou (2) à oreilles (3) pour permettre l'introduction et le pré-montage de l'écrou (2) dans la cage (1) au travers de ladite platine.

2. Ecrou encagé selon la revendication 1, caractérisé en ce que l'orifice allongé (8) dans la platine précitée (4) s'étend suivant une direction orthogonale au logement (9) formé en fond de cage entre les deux rampes (6) pour recevoir et retenir l'écrou (2) à oreilles (3) venant en butée sur ledit fond (5).

3. Ecrou encagé selon la revendication 1 ou 2, caractérisé en ce que le logement précité (9) défini par la combinaison du fond (5) de la cage (1) avec les deux bras (15) formant rampes (6) est d'une forme telle qu'il constitue un moyen de clippage de l'écrou (2) à oreilles (3) dans ledit fond.

4. Ecrou encagé selon l'une des revendications précédentes, caractérisé en ce que l'orifice allongé (8) dans la platine (4) possède une forme et/ou des dimensions telles que l'écrou (2) à oreilles (3) doit y être introduit à force et ne peut pas ressortir de la cage (1).

## Patentansprüche

1. Käfigmutter der eine in einem Käfig (1) gefangen angeordnete Mutter (2) mit Flügeln (3) umfassenden Gattung, wobei der Käfig zwei durch Rampen (6) bestimmte wendelteilförmige entgegengesetzte Öffnungen (7) aufweist, die geeignet sind, jeweils einen Flügel (3) der Mutter (2) aufzunehmen, die somit sich unter der Wirkung einer Schraubenwirkung durch Translation-Drehung in dem Käfig (1) bewegen kann, wobei der Käfig an seinem seinem Boden (5) entgegengesetzten oberen Teil eine mit einer Öffnung versehene Stützplatte (4) aufweist, dadurch gekennzeichnet, daß die besagte Öffnung (8) eine der Gestalt der Mutter (2) mit Flügeln (3) etwa entsprechende längliche Gestalt aufweist, um die Einführung und den Voreinbau der Mutter (2) in den Käfig (1) durch die besagte Platte hindurch zu gestatten.

2. Käfigmutter gemäß Anspruch 1, dadurch gekennzeichnet, daß die längliche Öffnung (8) in der vorgenannten Platte (4) sich in einer zu der am Käfigboden zwischen den beiden Rampen (6) zur Aufnahme und Zurückhaltung der an dem besagten Boden (5) zum Anschlag kommenden Mutter (2) mit Flügeln (3) gebildeten Aufnahme (9) senkrechten Richtung erstreckt.

3. Käfigmutter nach Anspruch 1 oder 2, dadurch gekennzeichnet, daß die durch die Kombination des Bodens (5) des Käfigs (1) mit den beiden Rampen (6) bildenden Armen (15) bestimmte vorgenannte Aufnahme (9) einer solchen Gestalt ist, daß sie ein Mittel zum Einklemmen der Mutter (2) mit Flügeln (3) in den besagten Boden bildet.

4. Käfigmutter gemäß einer der vorangehenden Ansprüche, dadurch gekennzeichnet, daß die längliche Öffnung (8) in der Platte (4) eine derartige Gestalt und/oder derartige Abmessungen besitzt, daß die Mutter (2) mit Flügeln (3) dort mit Gewalt eingeführt werden muß und nicht aus dem Käfig (1) herauskommen kann.

## Claims

1. Caged nut of the type comprising a nut (2) with wings (3) mounted in captive relationship in a cage (1) comprising ramps (6) defining two opposite openings (7) in the shape of a helix portion and adapted to receive each one one wing (3) of the nut (2) which thus may under the effect of a screwing action displace itself through translation-rotation in the cage (1) which comprises at its upper part, opposite to its bottom (5) a bearing plate (4) provided with an aperture, characterized in that the said aperture (8) exhibits an elongated shape corresponding substantially to the shape of the nut (2) with wings (3) to permit the insertion and the pre-mounting of the nut (2) into the cage (1) through the said plate.

2. Caged nut according to claim 1, characterized in that the elongated aperture (8) in the aforesaid plate (4) extends in a direction orthogonal to the recess (9) formed at the cage bottom between both ramps (6) for receiving and retaining the nut (2) with wings (3) caused to abut upon the said bottom (5).

3. Caged nut according to claim 1 or 2, characterized in that the aforesaid recess (9) defined by the combination of the bottom (5) of the cage (1) with both arms (15) forming ramps (6) has such a shape that it constitutes a means for clipping the nut (2) with wings (3) into the said bottom.

4. Caged nut according to one of the foregoing claims, characterized in that the elongated aperture (8) in the plate (4) has such a shape and/or dimensions that the nut (2) with wings (3) has to be force-fitted therein and may not move out of the cage (1).
